# EUROPÄISCHE PATENTSCHRIFT

(11) **EP 1 706 933 B1**
(45) Veröffentlichungstag und Bekanntmachung des Hinweises auf die Patenterteilung: **09.07.2008**
(21) Anmeldenummer: 05701546.3
(22) Anmeldetag: 19.01.2005
(51) Int. Cl.: H02K 9/19

(54) **KÜHLSYSTEM**
COOLING SYSTEM
SYSTEME DE REFROIDISSEMENT

(30) Priorität: 23.01.2004 DE 102004003533
(43) Veröffentlichungstag der Anmeldung: 04.10.2006
(73) Patentinhaber: Siemens Aktiengesellschaft, 80333 München (DE)
(72) Erfinder: FUCHS, Andreas, 91056 Erlangen (DE)
(86) Internationale Anmeldenummer: PCT/EP2005/050199
(87) Internationale Veröffentlichungsnummer: WO 2005/071820

(56) Entgegenhaltungen:
- DE-A1- 1 801 054
- FR-A- 2 748 428
- US-A- 3 439 203
- US-A- 3 760 603
- PATENT ABSTRACTS OF JAPAN Bd. 012, Nr. 135 (E-604), 23. April 1988 (1988-04-23) & JP 62 260543 A (HITACHI LTD), 12. November 1987 (1987-11-12)
- PATENT ABSTRACTS OF JAPAN Bd. 005, Nr. 015 (E-043), 29. Januar 1981 (1981-01-29) & JP 55 144749 A (TOSHIBA CORP), 11. November 1980 (1980-11-11)

## Beschreibung

Die Erfindung betrifft ein Kühlsystem mit einem Wärme aufnehmenden Kühler für eine permanenterregte Synchronmaschine, die insbesondere Motor einer Lokomotive ist, und mit einem Wärme an die Umgebung abgebenden Rückkühler, wobei eine erste Leitung vom Ausgang des Kühlers zum Eingang des Rückkühlers und eine zweite Leitung vom Ausgang des Rückkühlers zum Eingang des Kühlers führt.

"Lokomotive" steht für jedes elektrisch angetriebene Schienenfahrzeug.

Aus der JP 62-260543 A ist ein Kühlsystem für einen Generator bekannt, durch den Kühlwasser in einem Kreislauf geleitet wird. Das Kühlwasser wird in einem Kühler zurückgekühlt und durch eine Pumpe transportiert.

Aus der DE 18 01 054 A1 ist eine elektrische Asynchronmaschine bekannt, die durch in einem geschlossenen Kreislauf umlaufendes Wasser gekühlt wird. Das Wasser wird dabei durch eine Pumpe bewegt.

Die US 3 439 203 A beschreibt einen Generator, der durch Wasser gekühlt wird. Das heiße Wasser wird in einem Kühler zurückgekühlt und durch eine Pumpe zum Generator zurückgeführt.

Permanenterregte Synchronmaschinen müssen insbesondere dann, wenn sie als Motor für eine Lokomotive dienen, mit einem Kühlsystem ausgestattet sein. Das Kühlmittel des Kühlsystems ist in der Regel Wasser, das mit einem Frostschutzmittel versetzt ist.

Permanenterregte Synchronmaschinen zeichnen sich durch einen Permanentmagneten aus, was dazu führt, dass auch bei einer Abschleppfahrt, bei der der Motor nicht eingeschaltet ist, in der Synchronmaschine elektrische Ströme induziert werden, die eine Erwärmung bewirken. Diese Erwärmung geht auf Eisenverluste des permanenten Magnetfeldes zurück.

Während eines Abschleppvorganges steht in der Regel keine Hilfsenergiequelle zur Verfügung, mit der eine Kühlung der Synchronmaschine, beispielsweise indem das Kühlmittel im Kühlsystem umgepumpt wird, bewirkt werden könnte.

Bisher wurde daher die Abschleppgeschwindigkeit begrenzt, um zu vermeiden, dass der Motor der Lokomotive durch Überhitzung beschädigt wird. Dadurch dauerte der Abschleppvorgang sehr lange.

Das Anbringen einer zusätzlichen Energiequelle zum Betreiben einer Kühlung wäre aufwändig und erforderte ein gezieltes Einschalten vor dem Beginn einer Abschleppfahrt.

Der Erfindung liegt die Aufgabe zugrunde, ein Kühlsystem für eine permanenterregte Synchronmaschine anzugeben, das ohne Hilfsenergiequelle arbeitet und stets eine ausreichende Kühlung gewährleistet, insbesondere dann, wenn die Synchronmaschine Motor einer abgeschleppten Lokomotive ist, wobei der Motor generatorisch betrieben wird und sich dadurch stark erwärmt.

Die Aufgabe wird gemäß der Erfindung dadurch gelöst, dass keine Hilfsenergiequelle zum Kühlen vorhanden ist, dass in der ersten Leitung ein erstes zum Rückkühler hin durchlässiges Rückschlagventil und in der zweiten Leitung ein zweites zum Kühler hin durchlässiges Rückschlagventil angeordnet ist und dass eine ausreichende Kühlung durch den geeigneten Einsatz ausschließlich von den Rückschlagventilen gewährleistet wird.

Durch den geeigneten Einsatz von Rückschlagventilen wird der Vorteil erzielt, dass auch ohne den Betrieb einer Pumpe ein Kühlmittelumlauf gewährleistet ist. Eine gegebenenfalls vorhandene Pumpe im Kühlsystem würde nämlich beim Abschleppen und bei folglich fehlender Hilfsenergieversorgung nicht in Betrieb sein. Durch die beiden Rückschlagventile wird ein Kreislauf vorgegeben. Das Kühlmittel muss sich also stets in der gleichen Richtung bewegen. Dadurch bedingt wird spätestens dann, wenn ein Teil des Kühlmittels verdampft ist, die Flüssigkeit vom in der ersten Leitung aufsteigenden Dampf mitgerissen. Auch ohne Pumpe gelangt also der im Kühler erhitzte flüssige Teil des Kühlmittels zusammen mit dem dort entstandenen Dampf zum Rückkühler, wo das Flüssigkeit-DampfGemisch abgekühlt wird. Dabei kondensiert der Dampf und die Flüssigkeit kühlt ab. Dem Kühler wird folglich über die zweite Leitung ein ausreichend kühles Kühlmittel wieder zugeführt.

Mit dem Kühlsystem nach der Erfindung wird der Vorteil erzielt, dass ohne Hilfsnergiequelle und somit auch ohne Pumpe im Kühlsystem ein Kühlmittelumlauf stets gewährleistet ist, der geeignet ist, die permanenterregte Synchronmaschine ausreichend zu kühlen, auch dann, falls sie in einer abgeschleppten Lokomotive generatorisch betrieben ist und aufgrund des vorhandenen Permanentmagneten durch induzierte Ströme erwärmt wird.

Die Geschwindigkeit beim Abschleppen braucht daher vorteilhaft nicht begrenzt zu werden.

Der Kühler ist beispielsweise als Kühlschlange ausgebildet, die der permanenterregten Synchronmaschine zugeordnet ist und eine gute Wärmeableitung gewährleistet.

Beispielsweise ist an die erste und/oder an die zweite Leitung mindestens ein Druckausgleichsgefäß angeschlossen. Damit wird der Vorteil erzielt, dass Druckstöße, die in den Leitungen vorkommen können, vom empfindlichen Rückkühler ferngehalten werden.

Beispielsweise ist in einer der beiden Leitungen eine Pumpe mit Pumprichtung in Durchlassrichtung des Rückschlagventils angeordnet, die beim Abschleppen einer durch die Synchronmaschine angetriebenen Lokomotive und bei folglich fehlender Hilfsenergieversorgung nicht in Betrieb ist.

Falls doch noch Hilfsenergie vorhanden ist, kann dann der Kühlmittelumlauf durch die Pumpe unterstützt werden.

Diese Pumpe kann selbstverständlich auch eine für den Normalbetrieb der Synchronmaschine (Lokomotive in Betrieb) ohnehin vorhandene Pumpe sein.

Beispielsweise ist die Pumpe von einer Bypassleitung überbrückt. Damit wird der Vorteil erzielt, dass die Pumpe, wenn sie ausgeschaltet ist, den Kühlmittelumlauf nicht behindern kann.

Beispielsweise überbrückt die Bypassleitung die Pumpe und das mit ihr in Serie geschaltete Rückschlagventil und in der Bypassleitung ist ein drittes gleichgerichtet zur Pumprichtung durchlässiges Rückschlagventil angeordnet. Auch hiermit werden störende Einflüsse der ausgeschalteten Pumpe auf den Kühlmittelkreislauf ausgeschlossen.

Beispielsweise ist in der einen der beiden Leitungen ein weiterer Kühler eingebunden und dieser weitere Kühler und die Pumpe sind von der Bypassleitung überbrückt. Es können auch zwei Bypassleitungen, eine für die Pumpe und eine für den weiteren Kühler, vorhanden sein. Falls keine Pumpe vorgesehen sein sollte, überbrückt die Bypassleitung nur den weiteren Kühler.

Der weitere Kühler kann z.B. zum Kühlen eines Stromrichters dienen, was jedoch nur während des Normalbetriebes der Synchronmaschine notwendig ist. Sobald die Synchronmaschine zum Antreiben einer Lokomotive nicht mehr benötigt, aber trotzdem erwärmt wird, weil die Lokomotive abgeschleppt wird, muss dann nur noch die Synchronmaschine, nicht aber der Stromrichter gekühlt werden, weil im Stromrichter keine Ströme induziert werden. Das Kühlmittel kann dann ausschließlich für den Kühler der Synchronmaschine zur Verfügung stehen. Da jedoch der Rückkühler so ausgelegt ist, dass im Normalbetrieb Motor und Stromrichter gekühlt werden können, steht beim Abschleppen der Lokomotive der größere Rückkühler ausschließlich für den Kühler der Synchronmaschine zur Verfügung, was eine verbesserte Kühlleistung ermöglicht.

Die Bypassleitung überbrückt beispielsweise eine Serienschaltung aus dem weiteren Kühler, der Pumpe und einem Rückschlagventil, wobei in der Bypassleitung ein drittes gleichgerichtet zur Pumprichtung durchlässiges Rückschlagventil angeordnet ist.

Auch hiermit wird der Vorteil erzielt, dass dann, wenn die Pumpe nicht arbeitet, das Kühlmittel über die Bypassleitung nur für den Kühler der Synchronmaschine zur Verfügung steht und dem Rückkühler zugeleitet wird, der für den Kühler der Synchronmaschine und für den zusätzlichen Kühler ausgelegt ist. Man erzielt also eine deutlich verbesserte Kühlleistung, wenn nur die Synchronmaschine gekühlt werden soll.

Mit dem Kühlsystem nach der Erfindung wird insbesondere der Vorteil erzielt, dass auch in einem Notbetrieb, bei dem eine Pumpe im Kühlsystem nicht betrieben werden kann, eine Kühlung einer permanenterregten Synchronmaschine trotzdem zuverlässig möglich ist. Es kann also beispielsweise eine mit permanenterregten Synchronmaschinen angetriebene Lokomotive auch mit relativ hoher Geschwindigkeit abgeschleppt werden, ohne dass sich die Erwärmung der Synchronmaschine durch Induktionsstrom negativ auswirken kann. Auch bei einem Ausfall der Pumpe durch einen Defekt kann vorteilhaft eine ausreichende Notkühlung der Synchronmaschine, selbst im Normalbetrieb, gewährleistet werden.

Drei Ausführungsbeispiele des Kühlsystems nach der Erfindung werden anhand der Zeichnung näher erläutert:
FIG 1 zeigt die Grundausführung des Kühlsystems.
FIG 2 zeigt ein Kühlsystem mit Bypass.
FIG 3 zeigt ein Kühlsystem mit weiterem Kühler.

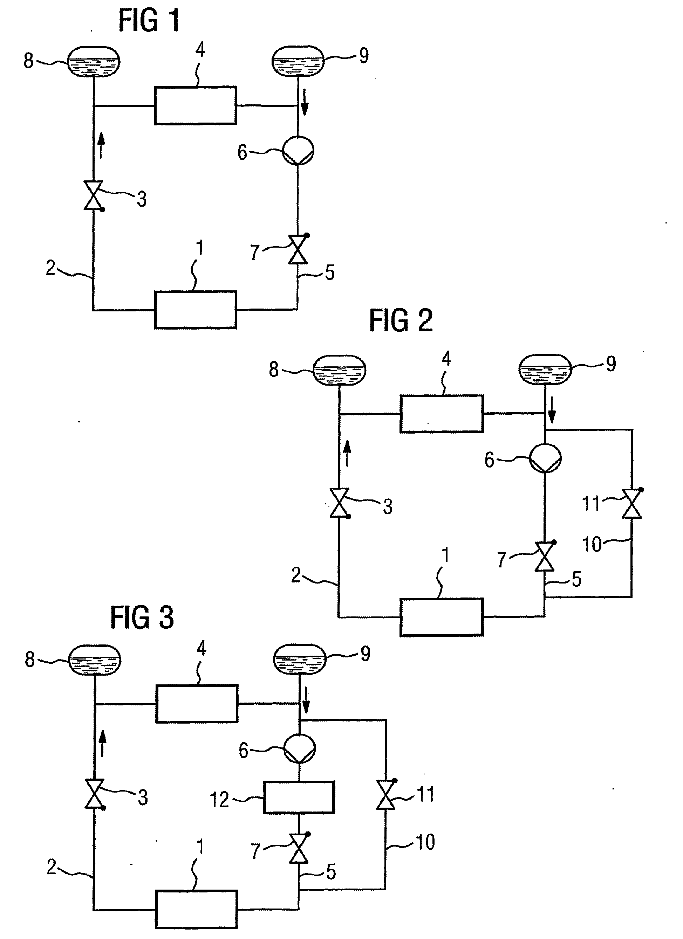

Das Kühlsystem nach Figur 1 zeigt als Kühler 1 eine Kühlschlange für eine nicht gezeigte permanenterregte Synchronmaschine. Vom Ausgang des Kühlers 1 führt eine erste Leitung 2 über ein erstes Rückschlagventil 3 zu einem Rückkühler 4, wo die im Kühler 1 vom Kühlmittel aufgenommene Wärme wieder abgegeben wird. Vom Ausgang des Rückkühlers 4 führt eine zweite Leitung 5, in die eine Pumpe 6 und ein zweites Rückschlagventil 7 eingebunden sind, zum Eingang des Kühlers 1.

Die Rückschlagventile 3 und 7 gewährleisten, da das erste Rückschlagventil 3 zum Rückkühler 4 hin und das zweite Rückschlagventil 7 zum Kühler 1 hin durchlässig ist, einen gerichteten Kühlmittelumlauf auch für den Fall, dass die Pumpe 6 nicht arbeitet. Um Druckstöße in den Leitungen 2 und 5 und insbesondere auch im Kühler 1 und im Rückkühler 4 zu vermeiden, ist ein erstes Druckausgleichsgefäß 8 mit der ersten Leitung 2 und ein zweites Druckausgleichsgefäß 9 mit der zweiten Leitung 5 verbunden.

Bei der Ausführungsform nach Figur 2, die im übrigen derjenigen nach Figur 1 entspricht, sind die Pumpe 6 und das zweite Rückschlagventil 7 durch eine Bypassleitung 10 überbrückt, in der ein drittes gleichgerichtet zur Pumprichtung durchlässiges Rückschlagventil 11 angeordnet ist. Hiermit wird der Vorteil erzielt, dass die Pumpe 6, wenn sie außer Betrieb ist, den Kühlmittelumlauf nicht behindern kann.

Die Ausführungsform nach Figur 3, die im übrigen der Ausführungsform nach Figur 2 entspricht, weist in der zweiten Leitung 5 in Serie mit der Pumpe 6 und dem zweiten Rückschlagventil 7 einen weiteren Kühler 12 auf, der z.B. zum Kühlen eines Stromrichters dienen kann. Im Normalbetrieb, z.B. dann, wenn die Lokomotive fährt und die Pumpe 6 in Betrieb ist, werden durch das Kühlsystem sowohl die Synchronmaschine als auch der Stromrichter gekühlt, so dass ein geeignet großer Rückkühler 4 notwendig ist. Wenn dann, z.B. beim Abschleppen der Lokomotive, nur die Synchronmaschine gekühlt werden muss, weil sich der Stromrichter nicht erwärmt, steht die gesamte Kapazität des Rückkühlers 4 für den Kühler 1 der Synchronmaschine zur Verfügung. Aufgrund der vorhandenen Bypassleitung 10 mit eingefügtem dritten Rückschlagventil 11 werden bei dieser Ausführungsform störende Einwirkungen der nicht in Betrieb befindlichen Pumpe 6 und auch des weiteren Kühlers 12 auf den Kühlmittelumlauf vermieden.

Der Kühler 1 ist stets in der Lage die Synchronmaschine zu kühlen, auch dann, wenn die Pumpe 6 nicht in Betrieb ist, z.B. dann, wenn eine Lokomotive mit permanenterregter Synchronmaschine abgeschleppt wird.

## Patentansprüche

1. Kühlsystem mit einem Wärme aufnehmenden Kühler (1) für eine permanenterregte Synchronmaschine, die insbesondere Motor einer Lokomotive ist, und mit einem Wärme an die Umgebung abgebenden Rückkühler (4), wobei eine erste Leitung (2) vom Ausgang des Kühlers (1) zum Eingang des Rückkühlers (4) und eine zweite Leitung (5) vom Ausgang des Rückkühlers (4) zum Eingang des Kühlers (1) führt, **dadurch gekennzeichnet, dass** keine Hilfsenergiequelle zum Kühlen vorhanden ist, dass in der ersten Leitung (2) ein erstes zum Rückkühler (4) hin durchlässiges Rückschlagventil (3) und in der zweiten Leitung (5) ein zweites zum Kühler (1) hin durchlässiges Rückschlagventil (7) angeordnet ist und dass eine ausreichende Kühlung durch den geeigneten Einsatz ausschließlich von den Rückschlagventilen (3, 7) gewährleistet ist.

2. Kühlsystem nach Anspruch 1,
**dadurch gekennzeichnet, dass** an die erste (2) und/oder zweite Leitung (5) mindestens ein Druckausgleichsgefäß (8 und/oder 9) angeschlossen ist.

3. Kühlsystem nach einem der Ansprüche 1 oder 2, **dadurch gekennzeichnet, dass** in einer der beiden Leitungen (5) eine Pumpe (6) mit Pumprichtung in Durchlassrichtung des Rückschlagventils (7) angeordnet ist, die beim Abschleppen einer durch die Synchronmaschine angetriebenen Lokomotive und bei folglich fehlender Hilfsenergieversorgung nicht in Betrieb ist.

4. Kühlsystem nach Anspruch 3,
**dadurch gekennzeichnet, dass** die Pumpe (6) von einer Bypassleitung (10) überbrückt ist.

5. Kühlsystem nach Anspruch 4,
**dadurch gekennzeichnet, dass** die Bypassleitung (10), die Pumpe (6) und das mit ihr in Serie geschaltete Rückschlagventil (7) überbrückt und dass in der Bypassleitung (10) ein drittes gleichgerichtet zur Pumprichtung durchlässiges Rückschlagventil (11) angeordnet ist.

6. Kühlsystem nach einem der Ansprüche 4 oder 5,
**dadurch gekennzeichnet, dass** in der einen der beiden Leitungen (5) ein weiterer Kühler (12) eingebunden ist und dass dieser weitere Kühler (12) und die Pumpe (6) von der Bypassleitung (10) überbrückt sind.

7. Kühlsystem nach Anspruch 6,
**dadurch gekennzeichnet, dass** die Bypassleitung (10) eine Serienschaltung aus dem weiteren Kühler (12), der Pumpe (6) und einem Rückschlagventil (7) überbrückt und dass in der Bypassleitung (10) ein drittes gleichgerichtet zur Pumprichtung durchlässiges Rückschlagventil (11) angeordnet ist.

## Claims

1. Cooling system with a heat-absorbing cooler (1) for a permanently-excited synchronous machine, which is especially the motor of a locomotive, and with a heat exchanger (4) emitting heat to the surroundings, with a first line (2) leading from the output of the cooler (1) to the input of the heat exchanger (4) and a second line (5) leading from the output of the heat exchanger (4) to the input of the cooler (1), **characterized in that** no auxiliary energy source is present for cooling, that a first non-return valve (3) allowing passage through to the heat exchanger (4) is arranged in the first line (2) and a second non-return valve (7) allowing passage through to the cooler (1) is arranged in the second line (5) and that a sufficient cooling is exclusively guaranteed by the appropriate use of the non-return valves (3, 7).

2. Cooling system according to claim 1,
**characterized in that** at least one pressure equalization vessel (8 and/or 9) is connected to the first (2) and/or second line (5).

3. Cooling system according to one of claims 1 or 2,
**characterized in that** a pump (6) with pump direction in the direction of flow of the non-return valve (7) is arranged in one of the two lines (5), which is not in operation during haulage of a locomotive driven by the synchronous machine and with the consequent absence of auxiliary energy supply.

4. Cooling system according to claim 3,
**characterized in that** the pump (6) is bridged by a bypass line (10).

5. Cooling system according to claim 4,
**characterized in that** the bypass line (10) bridges the pump (6) and the non-return valve (7) connected in series with it and that a third non-return valve (11) aligned to allow passage in the same direction as the pump direction is arranged in the bypass line (10).

6. Cooling system according to one of the claims 4 or 5,
**characterized in that** a further cooler (12) is linked into one of the two lines (5) and that this further cooler (12) and the pump (6) are bridged by the bypass line (10).

7. Cooling system according to claim 6,
**characterized in that** the bypass line (10) bridges a series circuit consisting of the further cooler (12), the pump (6) and a non-return valve (7) and that a third non-return valve (11) aligned to allow passage in the same direction as the pump direction is arranged in the bypass line (10).

## Revendications

1. Système de refroidissement comprenant un refroidisseur ( 1 ) absorbant la chaleur pour une machine synchrone excitée en permanence, en particulier le moteur d'une locomotive, et comprenant un refroidisseur de recirculation ( 4 ) cédant de la chaleur à l'environnement, sachant qu'une première conduite ( 2 ) mène de la sortie du refroidisseur ( 1 ) à l'entrée du refroidisseur de recirculation ( 4 ) et qu'une deuxième conduite ( 5 ) mène de la sortie du refroidisseur de recirculation ( 4 ) à l'entrée du refroidisseur ( 1 ), **caractérisé en ce qu'**aucune source d'énergie auxiliaire n'est présente pour le refroidissement, **en ce qu'**un premier clapet anti-retour ( 3 ) perméable vers le refroidisseur de recirculation ( 4) est disposé dans la première conduite ( 2 ) et **en ce qu'**un deuxième clapet anti-retour ( 7 ) perméable vers le refroidisseur ( 1 ) est disposé dans la deuxième conduite ( 5 ) et **en ce que** l'utilisation appropriée exclusive des clapets anti-retour ( 3, 7 ) garantit un refroidissement suffisant.

2. Système de refroidissement selon la revendication 1, **caractérisé en ce qu'**au moins un vase d'expansion ( 8 et/ou 9 ) est raccordé à la première ( 2 ) et/ou la deuxième conduite ( 5 ).

3. Système de refroidissement selon l'une des revendications 1 ou 2, **caractérisé en ce que** dans l'une des deux conduites ( 5 ) est montée une pompe ( 6 ) dont la direction de pompage correspond au sens de passage du clapet anti-retour ( 7 ), et qui ne fonctionne pas lors du remorquage d'une locomotive entraînée par la machine synchrone et lors d'une alimentation en énergie auxiliaire par conséquent manquante.

4. Système de refroidissement selon la revendication 3, **caractérisé en ce que** la pompe ( 6 ) est contournée par une conduite de dérivation ( 10 ).

5. Système de refroidissement selon la revendication 4, **caractérisé en ce que** la conduite de dérivation ( 10 ) contourne la pompe ( 6 ) et le clapet anti-retour (7) monté en série avec celle-ci et **en ce qu'**un troisième clapet anti-retour ( 11 ) perméable dans le même sens que le sens de la pompe est disposé dans la conduite de dérivation ( 10 ).

6. Système de refroidissement selon l'une des revendications 4 ou 5, **caractérisé en ce que** dans l'une des deux conduites ( 5 ) est intégré un autre refroidisseur ( 12 ) et **en ce que** la conduite de dérivation ( 10 ) contourne cet autre refroidisseur ( 23 ) et la pompe ( 6 ).

7. Système de refroidissement selon la revendication 6, **caractérisé en ce que** la conduite de dérivation ( 10 ) contourne un circuit en série constitué de l'autre refroidisseur ( 12 ), de la pompe ( 6 ) et d'un clapet anti-retour ( 7 ) et **en ce qu'**un troisième clapet anti-retour ( 11 ) perméable dans le même sens que le sens de la pompe est disposé dans la conduite de dérivation ( 10 ).
